Europäisches Patentamt

European Patent Office

Office européen des brevets

(19)

(11) EP 0 707 685 B1

(12) EUROPÄISCHE PATENTSCHRIFT

(45) Veröffentlichungstag und Bekanntmachung des Hinweises auf die Patenterteilung:
02.04.1997 Patentblatt 1997/14

(21) Anmeldenummer: 93915830.9

(22) Anmeldetag: 07.07.1993

(51) Int Cl.6: **F02D 41/18**, G01F 1/68, G01F 1/72

(86) Internationale Anmeldenummer:
PCT/EP93/01766

(87) Internationale Veröffentlichungsnummer:
WO 94/02730 (03.02.1994 Gazette 1994/04)

(54) **VERFAHREN ZUR ANPASSUNG DER LUFTWERTE AUS EINEM ERSATZKENNFELD, DAS BEI PULSATIONEN DER LUFT IM ANSAUGROHR EINER BRENNKRAFTMASCHINE ZUR STEUERUNG DER GEMISCHAUFBEREITUNG VERWENDET WIRD, AN DIE AKTUELL HERRSCHENDEN ZUSTANDSGRÖSSEN DER AUSSENLUFT**

METHOD OF ADAPTING INTERNAL-COMBUSTION ENGINE AIR VALUES FROM A SUBSTITUTE CHARACTERISTIC DIAGRAM USED TO CONTROL, ON THE OCCURRENCE OF PULSING IN THE AIR-ASPIRATION LINE, THE FORMATION OF THE MIXTURE TO SUIT THE CURRENTLY PREVAILING OUTSIDE-AIR CONDITIONS

PROCEDE D'ADAPTATION, AUX VARIABLES EN COURS DE L'AIR EXTERIEUR, DES VALEURS D'AIR D'UN DIAGRAMME CARACTERISTIQUE DE SUBSTITUTION UTILISE LORSQU'IL SE PRODUIT DES PULSATIONS DE L'AIR DANS LA TUBULURE D'ADMISSION D'UN MOTEUR A COMBUSTION INTERNE POUR COMMANDER LA FORMATION DU MELANGE

(84) Benannte Vertragsstaaten:
**DE FR GB**

(43) Veröffentlichungstag der Anmeldung:
**24.04.1996 Patentblatt 1996/17**

(73) Patentinhaber: **SIEMENS AKTIENGESELLSCHAFT
80333 München (DE)**

(72) Erfinder:
• **SÜDHOLT, Michael
D-93096 Köfering (DE)**

• **WIER, Manfred, Dr.
D-93173 Wenzebach (DE)**
• **KREBS, Stephan, Dr.
D-93049 Regensburg (DE)**
• **BAUER, Bernhard
D-93057 Regensburg (DE)**
• **REUPKE, Wolfgang
D-93152 Nittendorf-Zeiler (DE)**

(56) Entgegenhaltungen:
**EP-A- 0 087 809          WO-A-91/02225
DE-A- 4 018 776          US-A- 4 945 883**

EP 0 707 685 B1

**Beschreibung**

Verfahren zur Anpassung der Luftwerte aus einem Ersatzkennfeld, das bei Pulsationen der Luft im Ansaugrohr einer Brennkraftmaschine zur Steuerung der Gemischaufbereitung verwendet wird, an die aktuell herrschenden Zustandsgrößen der Außenluft.

Die vorliegende Erfindung betrifft ein Verfahren zur Anpassung der Luftwerte aus einem Ersatzkennfeld, das bei Pulsationen der Luft im Ansaugrohr einer Brennkraftmaschine zur Steuerung der Gemischaufbereitung verwendet wird, an die aktuell herrschenden Zustandsgrößen der Außenluft, wie beispielsweise Temperatur und Druck.

Zur richtigen Gemischaufbereitung benötigen Kraftstoffzumeßsysteme eine genaue Information über die von der Brennkraftmaschine je Hub angesaugte Luftmasse. Diese Information erhalten sie über schnell ansprechende Luftmeßgeräte, die beispielsweise nach dem Heißfilmprinzip arbeiten. Durch die hohe Ansprechgeschwindigkeit folgt das Ausgangssignal des Luftmessers jeder Pulsation im Luftstrom. Auch rückströmende Luftmassen werden fälschlicherweise miterfaßt.

Sobald solche Pulsationen auftreten, liefert daher der Luftmesser keine korrekten Meßwerte mehr, die für die Gemischaufbereitung verwendbar wären.

Werden solche Pulsationen erkannt, so werden für die Gemischaufbereitung statt der Meßwerte des Luftmessers vorgegebene Luftwerte aus einem Ersatzkennfeld verwendet. Diese Werte sind dort abhängig beispielsweise von der Last, insbesondere der Drehzahl und dem Drosselklappenwinkel abgespeichert. Diese Luftwerte wurden, abgestimmt auf den jeweiligen Motorentyp, bei Normtemperatur und Normdruck ermittelt und im Ersatzkennfeld gespeichert.

Der Stand der Technik ist in der WO-A- 91 02225 beschrieben. Diese zeigt: Ein System zur Berechnung einer Einspritzzeit für eine Brennkraftmaschine benutzt als Luftmassenwert entweder einen Kennfeldwert abgeleitet von einem Hitzdrahtnesser, dessen analoge Messwerte mittels eines Kennfelds in einen digitalen Luftmassenwert umgerechnet werden müssen, oder einen Ersatzkennfeldwert, der ,wenn Pulsation auftritt, mit einem Adaptionsfaktor KH multipliziert wird. KH wird aufgrund eines Vergleichs zwischen dem Hitzdraht - Luftmassenwert und dem Ersatzwert gewonnen.

Aufgabe der vorliegenden Erfindung ist es, ein Verfahre anzugeben, mit dem die Luftwerte aus dem Ersatzkennfeld an die aktuell herrschenden Zustandsgrößen der Außenluft angepaßt werden können.

Gelöst wird dies mit Verfahren gemäß den Merkmalen des Anspruchs 1, bzw. 2 vorteilhafte Weiterbildungen ergeben sich aus den Unteransprüchen.

Beim erfindungsgemäßen Verfahren werden zunächst zwei Betriebsbereiche der Brennkraftmaschine unterschieden:

Außerhalb der Pulsation:

Für die Gemischaufbereitung wird der vom Luftmesser gelieferte Meßwert verwendet. Gleichzeitig wird in vorgebbaren Zeitabständen der vom Luftmesser gemessene Luftwert mit dem zugehörigen Luftwert aus dem Ersatzkennfeld verglichen und daraus ein Adaptionsfaktor errechnet. Wahlweise kann in diese Berechnung außerdem die gemessene Temperatur der Außenluft eingehen. Der Adaptionsfaktor wird anschließend noch einer gleitenden Mittelung unterzogen.

Treten nun Pulsationen auf, werden für die Gemischaufbereitung nicht mehr die vom Luftmesser gelieferten Meßwerte verwendet, sondern Luftwerte aus dem Ersatzkennfeld. Diese werden aber zuvor mit dem Adaptionsfaktor modifiziert.

Innerhalb der Pulsation:

Für die Gemischaufbereitung wird nicht der vom Luftmesser gelieferte Meßwert verwendet, sondern der Ersatzluftwert aus dem Ersatzkennfeld modifiziert mit dem Adaptionsfaktor. Gleichzeitig wird innerhalb der Pulsation weiter ein Adaptionsfaktor ermittelt. Da durch die Pulsationen der Luftwert vom Luftmesser nicht verwendbar ist, wird statt dessen der Lambda-Regler-Mittelwert verwendet. Dieser Wert wird anschließend einer gleitenden Mittelung unterzogen und stellt dann den Adaptionsfaktor dar.

Vorteilhafterweise wird kein Adaptionsfaktor berechnet, wenn sich die Brennkraftmaschine in den Betriebsbereichen der Beschleunigungsanreicherung, der Schubreduzierung oder des Nachstarts befindet oder wenn der gemessene Luftwert sehr klein ist.

Möglich ist es auch für Luftwerte, die kleiner als ein vorgebbarer Mindestwert sind, den Adaptionsfaktor mit einen ersten Lastfaktor zu modifizieren und für Luftwerte die größer als dieser vorgebbarer Mindestwert sind, den Adaptionsfaktor mit einem zweiten Lastfaktor zu modifizieren.

Die Erfindung soll im folgenden anhand der Zeichnungen noch näher erläutert werden. Es zeigen:

Figur 1    ein Ablaufdiagramm das schematisch die Berechnung des Adaptionsfaktors zeigt und

Figur 2    ein Ablaufdiagramm zur Verwendung des Adaptionsfaktors.

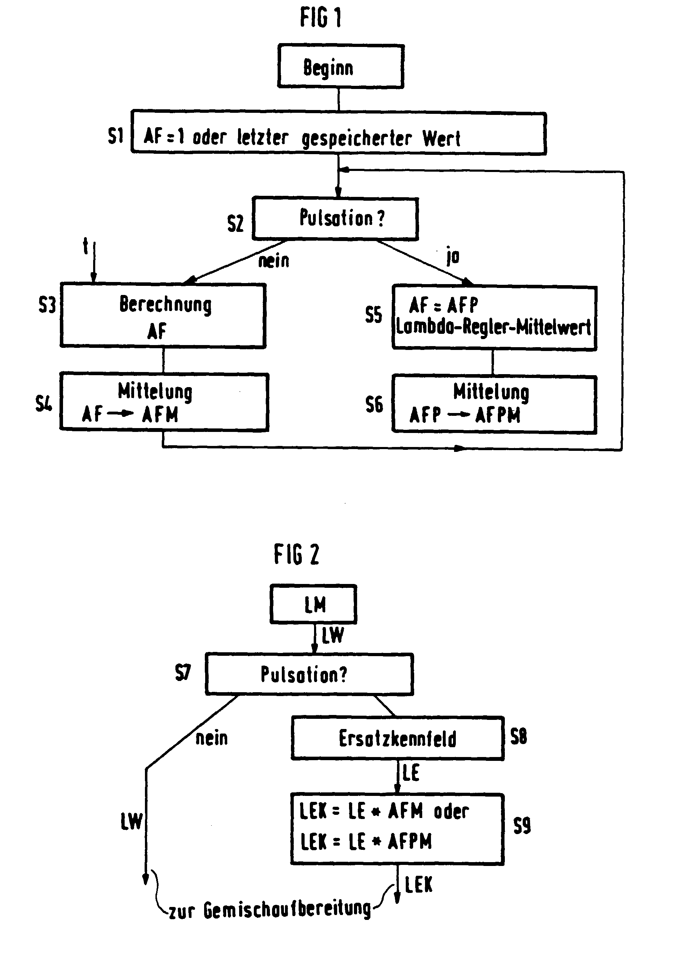

In Figur 1 wird im Verfahrensschritt S1 bei Neustart der Adaptionsfaktor gleich 1 gesetzt. Bei jedem weiteren Start wird der Adaptionsfaktor auf den zuletzt ermittelten und gespeicherten Wert des letzten Motorbetriebs gesetzt.

Im Verfahrensschritt S2 wird festgestellt über ein beliebiges, bekanntes, hier nicht näher beschriebenes Verfahren zur Erkennung von Pulsationen, ob Luftpulsationen im Ansaugtrakt der Brennkraftmaschine vorliegen. Ist dies nicht der Fall, wird im Verfahrensschritt S3 ein Adaptionsfaktor berechnet. Bei der Berechnung des Adaptionsfaktors werden die aktuell herrschenden Zustandsgrößen der Außenluft berücksichtigt.

Soll nur der Druck der Außenluft Verwendung finden, so berechnet sich der Adaptionsfaktor AF nach der Formel:

$$AFD = \frac{LW}{LE * TF} \, ,$$

wobei mit LW der von einem Luftmesser im Ansaugtrakt der Brennkraftmaschine gemessene Luftwert bezeichnet ist. LE stellt den aus einem Ersatzkennfeld entsprechend den aktuellen Betriebsgrößen der Brennkraftmaschine entnommenen Luftwert dar.

TF ist ein Temperaturfaktor, d.h. ein Faktor, der abhängt von der gemessenen Außentemperatur der Luft. Dieser Faktor berechnet sich beispielsweise nach der Formel:

$$TF = \sqrt{\frac{293\ K}{t + 273\ k}} \, ,$$

wobei t die gemessene Außentemperatur der Luft in °C ist.

Soll neben dem Druck auch die Temperatur der Außenluft Verwendung finden, so berechnet sich der Adaptionsfaktor AF nach der Formel:

$$AFDT = \frac{LW}{LE} \, ,$$

wobei LW und LE die schon oben beschriebenen Größen sind.

Im Verfahrensschritt S4 wird der nach einer der obigen Formeln ermittelte Adaptionsfaktor einer gleitenden Mittelung unterzogen, beispielsweise nach der Formel:

$$AFM = AF_{n-1} * (1\text{-}MITKO) + AF_n * MITKO,$$

wobei mit AFM ganz allgemein der gemittelte Adaptionsfaktor und mit AF ganz allgemein der nach einer der obigen Formeln ermittelte Adaptionsfaktor bezeichnet ist. MITKO stellt eine wählbare Mittelungskonstante dar, deren Werte zwischen 0 und 1 liegen.

Zur Ermittlung des nächsten Adaptionsfaktors wird wieder zum Verfahrensschritt S2 gegangen.

Wird im Verfahrensschritt S2 festgestellt, daß Pulsationen der Luft im Ansaugtrakt vorliegen, so wird im Verfahrensschritt S5 als Adaptionsfaktor der Mittelwert des Lambda-Reglers verwendet (AF = AFP). Dieser wird im Verfahrensschritt S6 dann ebenfalls einer gleitenden Mittelung unterzogen.

Zur Ermittlung des nächsten Adaptionsfaktors wird wieder zum Verfahrensschritt S2 gegangen.

In Figur 2 ist dargestellt, welcher Luftwert beim Betrieb der Brennkraftmaschine für die Gemischaufbereitung Verwendung findet.

Es wird dabei nach einem hier nicht näher beschriebenen Verfahren im Verfahrensschritt S7 geprüft, ob Pulsationen der Luft im Ansaugtrakt der Brennkraftmaschine vorliegen. Ist dies nicht der Fall, so wird zur Steuerung der Gemischaufbereitung der direkt vom Luftmassenmesser LM gemessene Luftwert LW verwendet.

Werden Pulsationen festgestellt, so wird im Verfahrensschritt S8 aus einem Ersatzkennfeld in Abhängigkeit von den aktuellen Betriebsbedingungen der Brennkraftmaschine ein Ersatzluftwert LE entnommen. Im Verfahrensschritt S9 wird dieser Ersatzluftwert mit dem zuvor berechneten Adaptionswert modifiziert (LEK).

Dieser modifizierte Ersatzluftwert LEK wird dann zur Steuerung der Gemischaufbereitung verwendet.

## Patentansprüche

1. Verfahren zur Anpassung der Luftwerte (LE) aus einem Ersatzkennfeld, die bei Pulsationen der Luft im Ansaugrohr einer Brennkraftmaschine anstelle der von einem Luftmesser gelieferten Meßwerte (LW) zur Steuerung der Gemischaufbereitung verwendet werden, an die aktuell herrschenden Zustandsgrößen der Außenluft wobei die Anpassung der Luftwerte (LE) durch Multiplikation der Luftwerte mit einem Adaptionsfaktor (AF) erfolgt, **dadurch gekennzeichnet daß,** der Adaptionsfaktor (AF) berechnet wird:

   - in Zeiten, wenn keine Pulsationen vorliegen, indem ein vom Luftmesser im Ansaugtrakt der Brennkraftmaschine gelieferter Luftwert (LW) dividiert wird durch einen dem Ersatzkennfeld entnommenen Ersatzluftwert (LE) und dieser Faktor einer gleitenden Mittelung unterzogen wird;

   - in Zeiten, wenn Pusationen vorliegen, indem als Adaptionsfaktor der mit dem Lambda-Regler-Mittelwert der gleitenden Mittelung unterzogene Adaptions faktor verwendet wird.

2. Verfahren zur Anpassung der Luftwerte (LE) aus einem Ersatzkennfeld, die bei Pulsationen der Luft im Ansaugrohr einer Brennkraftmaschine anstelle der von einem Luftmesser gelieferten Meßwerte (LW) zur Steuerung der Gemischaufbereitung verwendet werden, an die aktuell herrschenden Zustandsgrößen der Außenluft, wobei die Anpassung der Luftwerte (LE) durch Multiplikation der Luftwerte (LE) mit einem Adaptionsfaktor (AF) erfolgt, **dadurch gekennzeichnet daß,** der Adaptionsfaktor (AF) berechnet wird:

- in Zeiten, wenn keine Pulsationen vorliegen, indem dem Ersatzkennfeld ein Ersatzluftwert (LE) entnommen wird, dieser Ersatzluftwert (LE) mit einem Temperaturfaktor (TF) multipliziert wird und der Kehrwert dieser Multiplikation mit einem vom Luftmesser im Ansaugtrakt der Brennkraftmaschine gelieferten Luftwert (LW) multipliziert wird und das Ergebnis einer gleitenden Mittelung unterzogen wird,

- in Zeiten, wenn Pulsationen vorliegen, indem als Adaptionsfaktor der mit dem Lambda-Regler-Mittelwert der gleitenden Mittelung unterzogene Adaptions faktor verwendet wird.

3. Verfahren nach Anspruch 2,
   **dadurch gekennzeichnet**, daß
   der Temperaturfaktor (TF) berechnet wird,

   - indem zur gemessenen Außenlufttemperatur 273 K addiert wird,
   - der Kehrwert dieser Summe mit 293 K multipliziert wird und
   - aus dem Ganzen die Wurzel gezogen wird.

4. Verfahren nach Anspruch 1 oder 2
   **dadurch gekennzeichnet**, daß kein neuer Adaptionsfaktor (AF) berechnet wird, wenn sich die Brennkraftmaschine im Betriebsbereich

   - der Beschleunigungsanreicherung
   - der Schubreduzierung oder
   - des Nachstarts befindet oder
   - der gemessene Luftwert (LW) kleiner als ein vorgebbarer Mindestwert ist.

5. Verfahren nach Anspruch 1 oder 2
   **dadurch gekennzeichnet**, daß wenn der gemessene Luftwert (LW) kleiner als ein vorgebbarer Mindestwert ist, der Adaptionsfaktor mit einem ersten Lastfaktor modifiziert wird und wenn der gemessene Luftwert (LW) größer oder gleich einem vorgebbaren Mindestwert ist, der Adaptionsfaktor mit einem zweiten Lastfaktor modifiziert wird.

6. Verfahren nach Anspruch 1 oder 2
   **dadurch gekennzeichnet**, daß die gleitende Mittelung der Adaptionsfaktoren erfolgt gemäß der Formel $AFM = Af_{(n-1)} * (1-MITKO) + Af_{(n)} * MITKO$ mit einer wählbaren Mittelungskonstante (MITKO), deren Werte zwischen 0 und 1 liegen.

7. Verfahren nach Anspruch 1 oder 2
   **dadurch gekennzeichnet**, daß bei Neustart der Adaptionsfaktor zu 1 gesetzt wird und bei jedem weiteren Start auf den zuletzt ermittelten und gespeicherten Wert des letzten Motorbetriebs.

**Claims**

1. Method for adapting the air values (LE) from a substitute characteristic map, which are used, instead of the measured values (LW) supplied by an air meter, for the control of mixture preparation in the event of pulsations of air in the intake pipe of an internal combustion engine, to the currently prevailing state variables of the outside air, the adaptation of the air values (LE) being carried out by multiplying the air values by an adaptation factor (AF), characterized in that the adaptation factor (AF) is calculated:

   - in times when there are no pulsations, by dividing an air value (LW), supplied by the air meter in the intake tract of the internal combustion engine, by a substitute air value (LE) taken from the substitute characteristic map and subjecting this factor to sliding averaging;
   - in times when pulsations are present, by using the lambda controller average value as the adaptation factor and subjecting the adaptation factor to sliding averaging.

2. Method for adapting the air values (LE) from a substitute characteristic map, which are used, instead of the measured values (LW) supplied by an air meter, for the control of mixture preparation in the event of pulsations of air in the intake pipe of an internal combustion engine, to the currently prevailing state variables of the outside air, the adaptation of the air values (LE) by an adaptation factor (AF), characterized in that the adaptation factor (AF) is calculated:

   - in times when there are no pulsations, by taking a substitute air value (LE) from the substitute characteristic map, multiplying this substitute air value (LE) by a temperature factor (TF), multiplying the reciprocal value of this multiplication by an air value (LW) supplied by the air meter in the intake tract of the internal combustion engine and subjecting the result to sliding averaging,
   - in times when pulsations are present, by using the lambda controller average value as the adaptation factor and subjecting the adaptation factor to sliding averaging.

3. Method according to Claim 2, characterized in that the temperature factor (TF) is calculated

   - by adding 273 K to the measured outside-air temperature,
   - multiplying the reciprocal value of this sum by 293 K and
   - extracting the root from the total.

4. Method according to Claim 1 or 2, characterized in that no new adaptation factor (AF) is calculated when the internal combustion engine is in the operating range

- of acceleration enrichment
- of overrun reduction or
- of restarting or
- when the measured air value (LW) is lower than a predeterminable minimum value.

5. Method according to Claim 1 or 2, characterized in that, when the measured air value (LW) is lower than a predeterminable minimum value, the adaptation factor is modified by a first load factor, and, when the measured air value (LW) is higher than or equal to a predeterminable minimum value, the adaptation factor is modified by a second load factor.

6. Method according to Claim 1 or 2, characterized in that the sliding averaging of the adaptation factors is carried out according to the formula $AFM = AF_{(n-1)} * (1-MITKO) + AF_{(n)} * MITKO$ having a selectable averaging constant (MITKO), the values of which are between 0 and 1.

7. Method according to Claim 1 or 2, characterized in that, during a new start, the adaptation factor is set at 1 and, during each further start, the adaptation factor is set at the last-determined and stored value of the last engine operation.

**Revendications**

1. Procédé pour ajuster, aux grandeurs d'état régnant à l'instant donné dans l'air extérieur, les valeurs de l'air (LE) provenant d'un champ de caractéristiques de remplacement, et qui, dans le cas de pulsations de l'air dans la tubulure d'admission d'un moteur à combustion interne, sont utilisées à la place des valeurs de mesure (LW) fournies par un dispositif de mesure d'air, pour commander la préparation du mélange, étant entendu que l'ajustement des valeurs de l'air (LE) se fait en multipliant les valeurs d'air par un facteur d'ajustement (AF), caractérisé en ce que le facteur d'ajustement (AF) est calculé:

- aux instants où il ne se produit aucune pulsation, en divisant une valeur d'air (LW) fournie par le dispositif de mesure d'air, placé dans la pipe d'admission du moteur à combustion interne, par une valeur d'air de remplacement (LE) provenant du champ de caractéristiques de remplacement et en soumettant ce facteur d'ajustement au calcul d'une moyenne flottante,

- aux instants où il se produit des pulsations, en utilisant, comme facteur d'ajustement, le facteur d'ajustement tiré du calcul de la moyenne flottante avec la valeur moyenne du régulateur lambda.

2. Procédé pour ajuster, aux grandeurs d'état régnant à l'instant donné dans l'air extérieur, les valeurs de l'air (LE), provenant d'un champ de caractéristiques de remplacement, et qui, en cas de pulsations de l'air dans la tubulure d'admission d'un moteur à combustion interne sont utilisées pour commander la préparation du mélange à la place des valeurs de mesure (LW) fournies par un dispositif de mesure d'air, l'ajustement des valeurs de l'air (LE) se faisant en multipliant les valeurs d'air (LE) par un facteur d'ajustement (AF), caractérisé en ce que le facteur d'ajustement (AF) est calculé:

- aux instants où il ne se produit aucune pulsation, en retirant du champ de caractéristiques de remplacement une valeur d'air de remplacement (LE), en multipliant cette valeur d'air de remplacement (LE) par un facteur de température (TF), puis en multipliant la valeur inverse obtenue par cette multiplication par une valeur d'air (LW) fournie par le dispositif de mesure d'air placé dans la pipe d'admission du moteur à combustion interne, et en soumettant le résultat au calcul d'une moyenne flottante,

- aux instants où il se produit des pulsations, en utilisant, comme facteur d'ajustement, le facteur d'ajustement tiré du calcul de la moyenne flottante avec la valeur moyenne du régulateur lambda.

3. Procédé suivant la revendication 2, caractérisé en ce que le facteur de température (TF) est calculé

- en ajoutant 273 K à la température mesurée de l'air extérieur,

- en multipliant l'inverse de cette somme par 293 K, et

- en prenant la racine carrée du total obtenu.

4. Procédé suivant la revendication 1 ou la revendication 2, caractérisé en ce qu'aucun nouveau facteur d'ajustement (AF) n'est calculé si le moteur à combustion interne se trouve dans la zone de fonctionnement correspondant

- à un enrichissement dû à l'accélération,

- ou à une coupure d'injection en cas de décélération,

- ou à un démarrage à chaud

- ou si la valeur d'air mesurée (LW) est plus petite qu'une valeur minimale prédéfinie.

**5.** Procédé suivant la revendication 1 ou la revendication 2, caractérisé en ce que, si la valeur d'air mesurée (LW) est plus petite qu'une valeur minimale prédéfinie, le facteur d'ajustement est modifié par un premier facteur de charge, et si la valeur d'air mesurée (LW) est supérieure ou égale à une valeur minimale prédéfinie, le facteur d'ajustement est modifié par un deuxième facteur de charge.

**6.** Procédé suivant la revendication 1 ou la revendication 2, caractérisé en ce que le calcul de la moyenne flottante se fait suivant la formule

$$AFM = AF_{(n-1)} * (1\text{-MITKO}) + AF_{(n)} * MITKO$$

avec une constante (MITKO) de calcul de la moyenne, dont les valeurs peuvent être choisies entre 0 et 1.

**7.** Procédé suivant la revendication 1 ou la revendication 2, caractérisé en ce que, lors d'un nouveau démarrage, le facteur d'ajustement est fixé à 1 et, à chaque démarrage ultérieur, le facteur d'ajustement est fixé à la valeur du dernier fonctionnement du moteur, déterminée en dernier et mise en mémoire.

## FIG 1

```
                    ┌──────────────┐
                    │   Beginn     │
                    └──────┬───────┘
                           │
  S1 ┌──────────────────────────────────────────────┐
     │ AF = 1 oder letzter gespeicherter Wert        │
     └──────────────────────┬───────────────────────┘
                            │
                    ┌───────┴────────┐
              S2    │  Pulsation ?   │
                    └───────┬────────┘
               nein ────────┴──────── ja
```

S3  Berechnung AF

S5  AF = AFP Lambda-Regler-Mittelwert

S4  Mittelung AF → AFM

S6  Mittelung AFP → AFPM

## FIG 2

```
                    ┌──────────┐
                    │    LM    │
                    └────┬─────┘
                         │ LW
               S7 ┌──────┴────────┐
                  │  Pulsation?   │
                  └──────┬────────┘
             nein ───────┘
```

S8  Ersatzkennfeld

LE

S9  LEK = LE ∗ AFM oder LEK = LE ∗ AFPM

LW

LEK

zur Gemischaufbereitung